# EUROPÄISCHE PATENTSCHRIFT

(11) **EP 1 429 943 B1**
(45) Veröffentlichungstag und Bekanntmachung des Hinweises auf die Patenterteilung: **12.10.2005**
(21) Anmeldenummer: 02781095.1
(22) Anmeldetag: 12.09.2002
(51) Int. Cl.: B60R 21/16

(54) **AIRBAG**
AIRBAG
COUSSIN GONFLABLE DE SECURITE

(30) Priorität: 27.09.2001 DE 10148739
(43) Veröffentlichungstag der Anmeldung: 23.06.2004
(73) Patentinhaber: Takata-Petri AG, 63743 Aschaffenburg (DE)
(72) Erfinder: MAROTZKE, Thomas, 16562 Bergfelde (DE); ORTMANN, Sven, 15370 Fredersdorf (DE); LUTTER, Gerhard, 16562 Bergfelde (DE); ZÄHLE, Günter, 13051 Berlin (DE); CROHN, Detlef, 13156 Berlin (DE)
(74) Vertreter: Baumgärtel, Gunnar
(86) Internationale Anmeldenummer: PCT/DE2002/003475
(87) Internationale Veröffentlichungsnummer: WO 2003/031237

(56) Entgegenhaltungen:
- DE-A- 19 951 029
- DE-U- 20 010 726
- DE-U- 20 021 533
- DE-U- 20 102 107

## Beschreibung

Ein "Ringairbag" stellt den Airbag eines Fahrzeugairbagmoduls dar, bei welchem das Zentrumsteil der Abdeckung des Lenkrades (zumeist durch das Emblem des Fahrzeugherstellers gebildet) während des gesamten Entfaltungsvorganges in Position bleibt. Die Lenkradabdeckung öffnet sich nur im seitlichen Kappenbereich, um den Airbagaustritt zu ermöglichen.

Durch den sich nicht öffnenden Zentrumsbereich entsteht allerdings ein "Loch" in der Mitte des aufgeblasenen Airbags. Problematisch hierbei ist, dass der Kopf eines Fahrzeuginsassen unter Umständen in dieses Loch eindringen und auf das Zentrumsteil aufprallen kann, so dass ein ausreichender Schutz nicht mehr gewährleistet ist.

Aus der DE 201 02 107 U1 ist ein aus Ober- und Unterplatte bestehender Airbag bekannt, der derart in einem Lenkrad unter einer Abdeckung des Fahrzeuges angeordnet, dass ein Mittelstück der Abdeckung bei der Entfaltung des Airbags in Position bleibt. Oberhalb des Mittelstücks ist im Airbag eine Einbuchtung vorgesehen, dr die Oberplatte im Bereich im Bereich des Mittelstücks mit einem Aufnahmegehäuse verbindet.

Die vorliegende Erfindung hat zur Aufgabe, diese Problematik zumindest abzumindern. Diese Aufgabe wird durch die in dem unabhängigen Anspruch 1 angegebene Erfindung gelöst. Vorteilhafte Ausgestaltungen sind den Unteransprüchen zu entnehmen.

Erfindungsgemäss ist ein Airbag für ein Fahrzeug geschaffen, zur Anordnung in einem Lenkrad des Fahrzeuges unter einer Abdeckung derart, dass ein Zentrumsteil der Abdeckung bei einer Entfaltung des Airbags in Position bleibt, mit einer Oberplatte und einer damit verbundenen Unterplatte, und einem oberhalb des Zentrumsbereiches anzuordnenden schlauchartigen Bereich zur Verbindung der Oberplatte mit einem Airbagmodul im Bereich des Zentrumteils, wobei im aufgeblasenen Zustand des Airbags die Querschnittsfläche des schlauchartigen Bereiches vom Zentrumsteil in Richtung zur Oberplatte abnimmt.

Eine solche Oberplatte ermöglicht die einfache Herstellung eines Ringairbags, dessen durch Zungen gebildeter Schlauchbereich an der zum Fahrzeuginsassen gewandten Oberfläche der Oberplatte keinen zylinderförmigen, sondern einen schlitzförmigen Querschnitt aufweist. Dies hat zur Folge, dass der aufgeblasene Airbag kein "Loch" zwischen der der Fahrzeuginsassen zugewandten Oberfläche der Oberplatte und dem Zentrumsteil der Lenkradabdeckung aufweist.

Durch eine Verengung des Schlauches in Richtung zum Fahrzeuginsassen wird verhindert, dass dieser bei einem Unfall durch die durch den Querschnitt des Schlauches gebildete Öffnung auf das Zentrumsteil (Emblem) des Lenkrades aufschlägt.

Vorzugsweise sind in der Wandung des schlauchartigen Bereiches eine oder mehrere aufblasbare Taschen vorgesehen sind, die im aufgeblasenen Zustand die Querschnittsfläche des schlauchartigen Bereiches reduzieren.

In einer anderen Ausgestaltung sind in der Wandung des schlauchartigen Bereiches eine oder mehrere Falten vorgesehen sind, welche im aufgeblasenen Zustand des Airbags Taschen bilden, die die Querschnittsfläche des schlauchartigen Bereiches reduzieren.

Weiterhin kann die Querschnittsfläche des schlauchartigen Bereiches an der Oberplatte sternförmig sein. Der sternförmige Bereich ermöglicht ein einfaches "Überstreifen" der Oberplatte über das Lenkrademblem bei der Montage des Airbags. Andererseits ist auf der Oberfläche der Oberplatte im aufgeblasenen Zustand des Airbags lediglich eine schlitzartige sternförmige "offene" Querschnittsfläche vorhanden, anstatt eines zylindrischen Loches wie bei herkömmlichen Ringairbags.

Ausserdem kann die Oberplatte gegenüber der dem schlauchartigen Bereich verdreht am Airbagmodul angebracht sein. Dadurch wird der schlauchartige Bereich beim Aufblasen des Airbags "abgeschnürt" und dessen Querschnittsfläche reduziert.

In einer weiteren Ausgestaltung besteht der schlauchartige Bereich aus einem Gewebe, das sich bei Aufblasen des Airbags derart in eine Richtung zusammenzieht, dass die Querschnittsfläche des schlauchartigen Bereiches vermindert ist. Solche Gewebe, die sich bei Ausdehnung in einer Richtung in einer anderen Richtung zusammenziehen sind an sich bekannt. Bei einer Anwendung für den schlauchartigen Bereich bedeutet dies, dass beim Aufblasen des Airbags der schlauchartige Bereich sich in Richtung zum Fahrzeuginnenraum ausdehnt, und gleichzeitig quer dazu zusammenzieht. Damit wird die Querschnittsfläche des schlauchartigen Bereiches reduziert.

In einer weiteren Ausgestaltung weist der Airbag ein Zugband auf, das mit einem Ende an dem Airbagmodul, und mit dem anderen Ende an der Oberplatte befestigt ist, und das um den schlauchartigen Bereich herum verläuft, zum Abschnüren des schlauchartigen Bereiches bei einem Aufblasen des Airbags.

In dieser Ausgestaltung erfolgt die Verjüngung des schlauchartigen Bereiches also mittels eines zusätzlichen Zugbandes, anstatt durch eine spezielle Formgebung des schlauchartigen Bereiches des aufgeblasenen Airbags oder die Vorsehung von Taschen/Falten. Diese Ausgestaltung hat den Vorteil, dass gegenüber herkömmlichen Ringairbags nur geringe konstruktive Anpassungen erforderlich sind.

Erfindungsgemäss ist ausserdem ein Airbag für ein Fahrzeug geschaffen, zur Anordnung in einem Lenkrad des Fahrzeuges unter einer Abdeckung derart, dass ein Zentrumsteil der Abdeckung bei einer Entfaltung des Airbags in Position bleibt, mit einer Oberplatte mit zwei zueinander im wesentlichen symmetrischen Hälften, die jeweils einen im wesentlichen die Form eines Kreisausschnittes aufweisenden Teil, sowie eine sich in Richtung der Höhe des Kreisausschnittes verlaufende Zunge aufweisen, wobei die beiden Hälften entlang der Sehnen der Kreisausschnitte ausser im Bereich der Ansätze der Zungen, sowie entlang der Seiten der Zungen miteinander verbunden sind, und wobei die Oberplatte im Bereich der von den Kreisausschnitten wegweisenden Enden der Zungen unterhalb des Zentrumteiles an einem Airbagmodul befestigt ist.

Eine besonders einfache Verbindung der Hälften ist mittels Vernähung herzustellen. Allerdings kann die Oberplatte auch durch ein einstückiges Gewebeteil gefertigt werden, das nach Herstellung der erforderlichen Fläche in gewissen Bereichen vernäht wird. Dies wird anschliessend in Bezug auf die Figuren genauer erläutert.

In einer Ausgestaltung weisen die Zungen jeweils eine tonnenförmige Fläche auf. Im aufgeblasenen Zustand des Airbags bewirkt dies, dass die Querschnittsfläche des Schlauches zwischen Oberplattenoberfläche und Lenkrademblem stark reduziert ist, bzw. der Schlauch komplett verschlossen ist.

In einer weiteren Ausgestaltung weisen die Zungen jeweils mindestens eine Falte auf. Dadurch ist im Bereich des Schlauches zusätzliches aufblasbares Gewebe vorhanden. Bei einer Entfaltung des Airbags verschliesst das durch die Falten zusätzlich vorhandene Gewebe den Schlauch.

In einer weiteren Ausgestaltung weisen die Zungen im aufgeblasenen Zustand des Airbags sich zwischen den Zungen erstreckende Taschen auf. Durch die Taschen wird ebenfalls zusätzliches aufblasbares Gewebe gebildet, durch das die Querschnittsfläche des Schlauches im Bereich der Taschen vermindert wird.

In einer weiteren Ausgestaltung sind die Zungen relativ zu den die Form eines Kreisausschnittes aufweisenden Teilen verdreht am Airbagmodul angebracht. Durch diese verdrehte Anbringung ist der durch die Zungen im aufgeblasenen Zustand des Airbags gebildete Schlauch "abgeschnürt", so dass ein Fahrzeuginsassen vor einem Aufschlagen auf das Lenkrademblem schützt.

In einer weiteren Ausgestaltung bestehen die Zungen aus einem Gewebe, dass sich bei einer Ausdehnung der Zungen in Richtung von deren Längsachsen quer dazu zusammenzieht. Wie bereits erwähnt sind solche Gewebe an sich bekannt. In einem Ringairbag kann dieses Gewebe nun mit Vorteil für die besagten Zungen verwendet werden, so dass eine Verengung des durch die Zungen gebildeten Schlauches beim Aufblasen des Airbags herbeigeführt wird, ohne dass zusätzliche konstruktive Massnnahmen ergriffen werden müssen.

Anhand der Figuren werden nun beispielhafte Ausführungsformen der Erfindung erläutert. Es zeigen dabei
Figur 1 schematisch die zwei Hälften einer Oberplatte für einen Ringairbag nach einem ersten Ausführungsbeispiel der Erfindung;
Figur 2 schematisch zwei verschiedene perspektivische Ansichten einer Oberplatte eines Airbags nach dem ersten Ausführungsbeispiel;
Figur 3 schematisch den Querschnitt eines Airbagmoduls mit einem Airbag nach dem ersten Ausführungsbeispiel;
Figur 4 schematisch eine alternative Ausgestaltung der zwei Hälften einer Oberplatte für einen Ringairbag nach dem ersten Ausführungsbeispiel;
Figur 5 schematisch den Querschnitt eines Airbags nach dem ersten Ausführungsbeispiel im entfalteten/aufgeblasenen Zustand;
Figur 6 schematisch ein Gewebeteil zur Herstellung einer Oberplatte eines Airbags nach einem zweiten Ausführungsbeispiel der Erfindung;
Figur 7 schematisch den Querschnitt eines Airbags nach dem zweiten Ausführungsbeispiel im entfalteten/aufgeblasenen Zustand;
Figur 8 schematisch ein Gewebeteil zur Herstellung einer Oberplatte eines Airbags nach einem dritten Ausführungsbeispiel der Erfindung;
Figur 9 schematisch den Querschnitt eines Airbags nach dem dritten Ausführungsbeispiel im entfalteten/aufgeblasenen Zustand;
Figur 10 schematisch den Querschnitt einer Variante eines Airbags nach dem dritten Ausführungsbeispiel im aufgeblasenen Zustand;
Figur 11 schematisch den Querschnitt eines Airbags nach einem vierten Ausführungsbeispiel der Erfindung im aufgeblasenen Zustand;
Figur 12 schematisch eine perspektivische Ansicht eines Airbags nach einem fünften Ausführungsbeispiel der Erfindung im aufgeblasenen Zustand;
Figur 13 schematisch den Querschnitt eines Airbags nach einem sechsten Ausführungsbeispiel der Erfindung im aufgeblasenen Zustand;
Figur 14 zeigt eine Ausführungsvariante des sechsten Ausführungsbeispieles;
Figur 15 die Oberplatte eines Airbags nach dem ersten Ausführungsbeispiel in einem teilgefalteten Zustand; und
Figur 16 die Unterplatte eines Airbags nach dem ersten Ausführungsbeispiel.

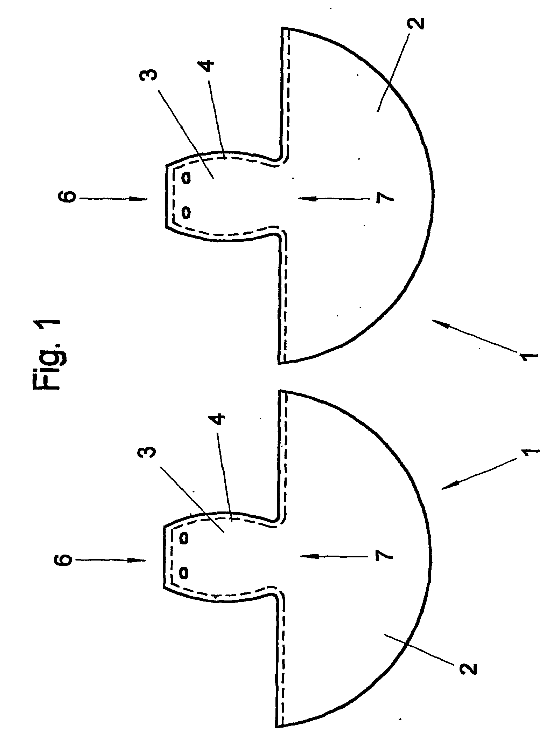

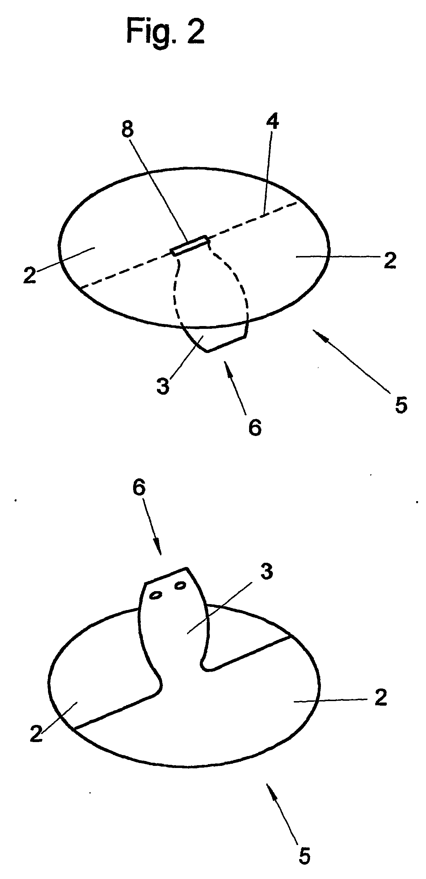

Figur 1 zeigt schematisch zwei Hälften 1 einer (ungefalteten) Oberplatte für einen Ringairbag nach einem ersten Ausführungsbeispiel der Erfindung. Die Hälften 1 umfassen jeweils einen halbkreisförmigen Bereich 2, sowie eine sich von diesem Bereich wegerstreckende tonneförmige Zunge 3. Die beiden Hälften 1 sind entlang einer Naht 4 miteinander zu verbunden. Figur 2 zeigt schematisch eine durch Vernähen der Hälften 1 gebildete Oberplatte 5. Darüberhinaus weisen die Hälften 1 jeweils Löcher 6 auf, mittels derer die Oberplatte am Diffusor eines Airbagmoduls befestigt werden kann.

Figur 2 zeigt die Oberplatte 5 aus zwei perspektivischen Ansichten. Mit dem mit 6 bezeichneten Ende der Zungen 3 ist die Oberplatte an dem Diffusor des Airbagmoduls zu befestigen.

In einem Bereich 7 am Ansatz der Zungen 3 sind die Hälften 1 der Oberplatte 5 nicht miteinanander verbunden. Die Oberplatte 5 weist dadurch auf der einem Fahrzeuginsassen zugewandten Oberfläche einen Schlitz 8 auf. Dieser Schlitz 8 ist so dimensioniert, dass ein fest in der Lenkradplatte positionierter Zentrumsteil (Fahrzeugemblem) durch diesen Schlitz hindurchgeführt werden kann. Mit anderen Worten ist der Umfang des Schlitzes grösser als der Umfang des Emblems.

Dies ist deshalb notwendig, da bei der Airbag im gefalteten Zustand unterhalb der Lenkradabdeckung gelagert ist, sich bei Auslösung jedoch um das Fahrzeugemblem herum entfalten muss. Das heisst, dass sich beim Aufblasen des Airbags das Fahrzeugemblem relativ zur Oberplatte durch den Schlitz 8 hindurchbewegt.

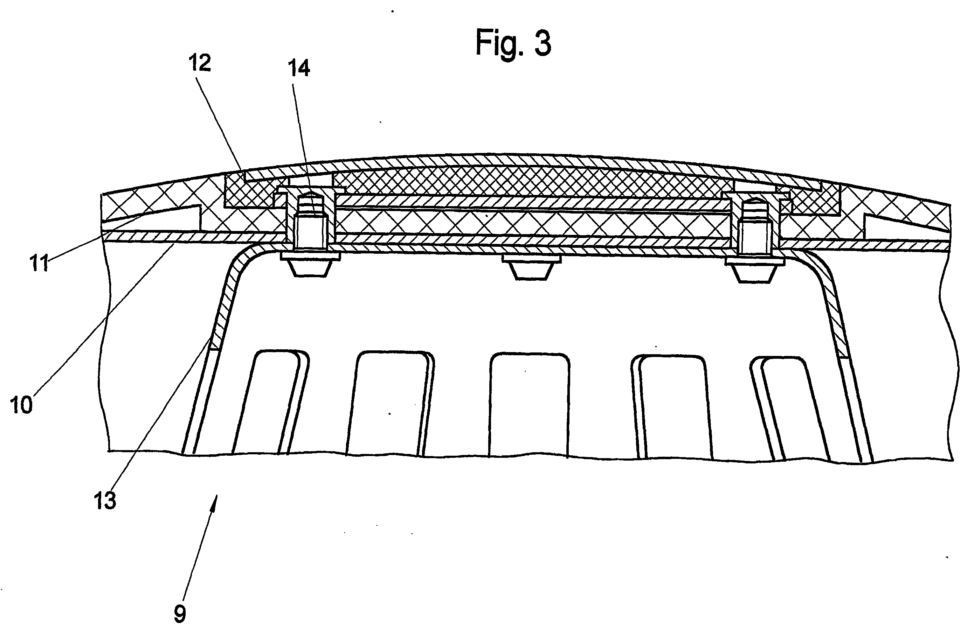

Figur 3 zeigt schematisch den Querschnitt eines Airbagmoduls 9 mit einem Airbag 10 nach dem ersten Ausführungsbeispiel im zusammengefalteten Zustand unter einer Abdeckung 11 eines Lenkrades. Ebenfalls dargestellt ist ein fest montiertes Emblem 12, ein Diffusor 13, sowie eine Befestigung 14 des Airbags 10, der Abdeckung 11, des Enblems 12 sowie des Diffusors 13 miteinander.

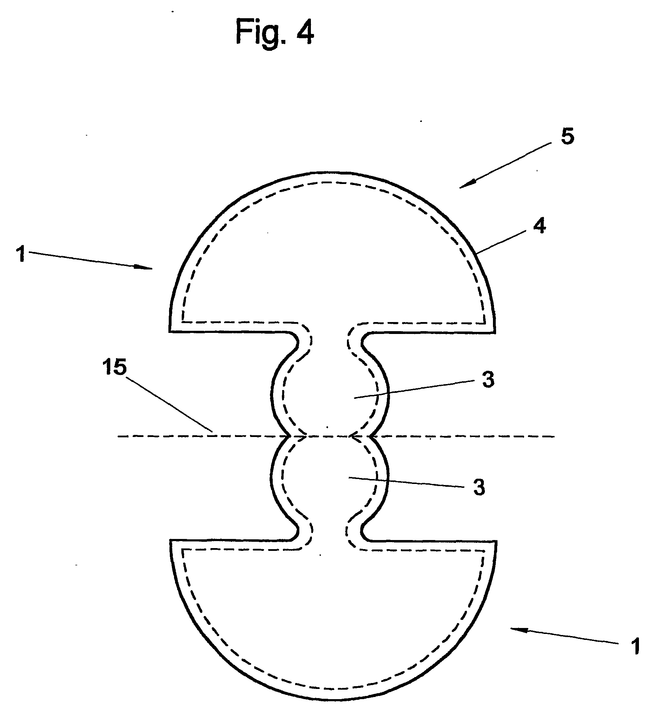

Figur 4 zeigt eine alternative Ausgestaltung der Hälften 1 zur Herstellung der Oberplatte 5. In dieser Ausgestaltung sind die Hälften einstückig aus einem Gewebeteil gefertigt. Das heisst, dass die Zungen 3 und damit die beiden Hälften 1 im Gegensatz zur ersten Ausgestaltung von vorne herein bereits miteinander verbunden sind. Zur Herstellung der Oberplatte werden die Hälften 1 entlang einer Faltlinie 1 aufeinander zugeklappt und anschliessend entlang der Naht 4 miteiander vernäht. Die resultierende Oberplatte entspricht der aus Figur 2.

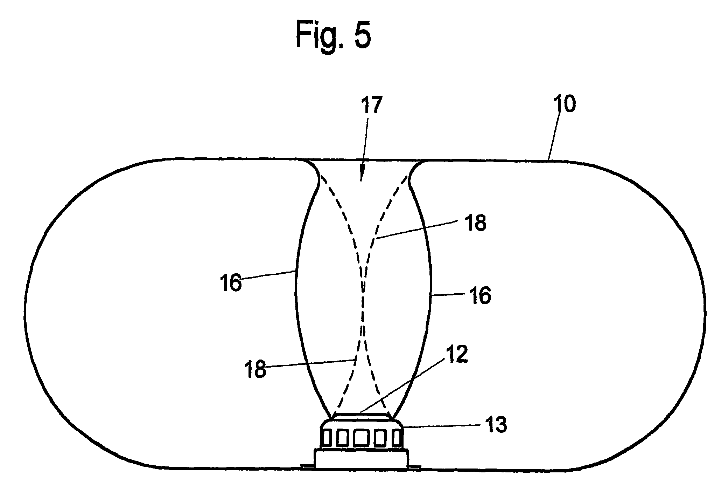

Figur 5 zeigt einen Airbag 10 nach dem ersten Ausführungsbeispiel im entfalteten Zustand. Durch die durchgezogenen Linien 16 ist der Verlauf der Airbagaussenwand im dem schlauchartigen Bereich 17 oberhalb des Emblems 12 im entfalteten aber nicht voll aufgeblasenen Zustand des Airbags 10 gezeigt. Die gestrichelte Linie 18 zeigt den Verlauf der Airbagaussenwand im voll aufgeblasenen Zustand. Dadurch wird verdeutlicht, wie der schlauchartige Bereich 17 im Vergleich zu herkömmlichen Ringairbags verschlossen wird, d.h. wie die Querschnittsfläche des schlauchartigen Bereiches vom Emblem 12 in Bildorientierung nach oben abnimmt.

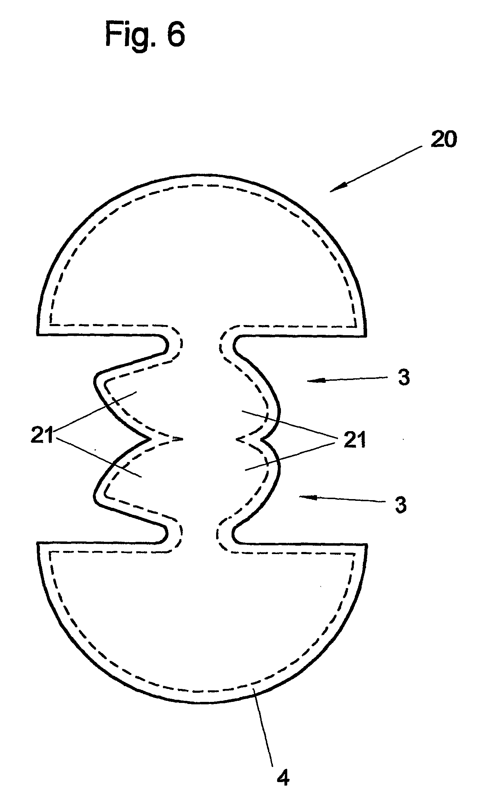

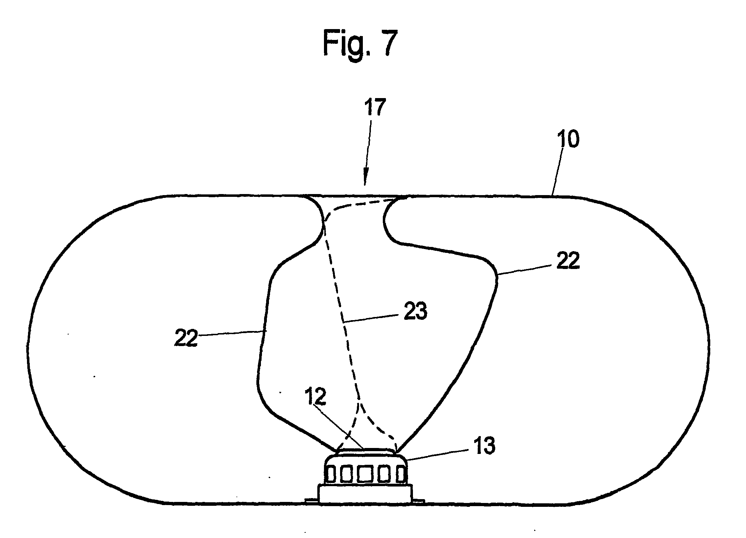

Figur 6 zeigt schematisch einen Gewebeteil 20 zur Herstellung einer Oberplatte eines Airbags nach einem zweiten Ausführungsbeispiel der Erfindung. Das Gewebeteil 20 unterscheidet sich von dem des ersten Ausführungsbeispieles darin, dass die Zungen 3 Taschen 21 aufweisen. Diese Taschen sind durch zusätzliches Gewebe im Bereich der Zungen 3 gebildet. Bei einem Aufblasen des Airbags füllen sich die Taschen 21 mit Luft und verschliessen den schlauchartigen Bereich 17. Dies ist in Figur 7 schematisch gezeigt.
Gezeigt ist der Airbag wiederum in entfaltetem Zustand (Taschen noch nicht aufgeblasen, Linien 22), sowie voll aufgeblasenem Zustand mit durch die Taschen 21 verschlossenem Bereich 17 (Linie 23).

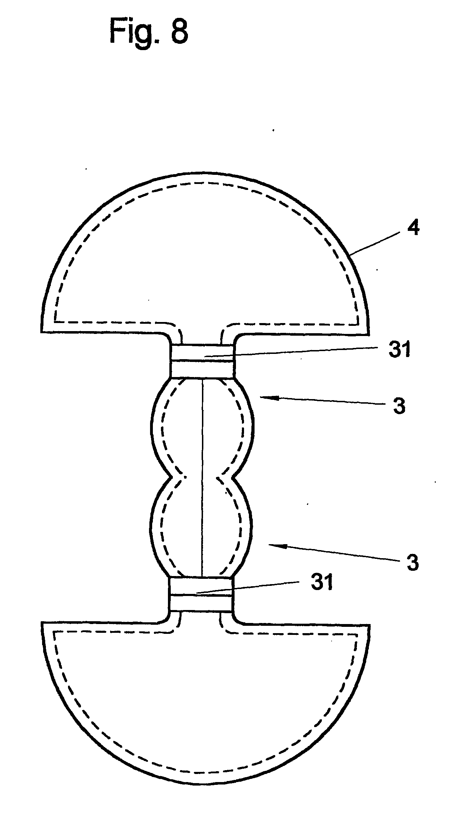

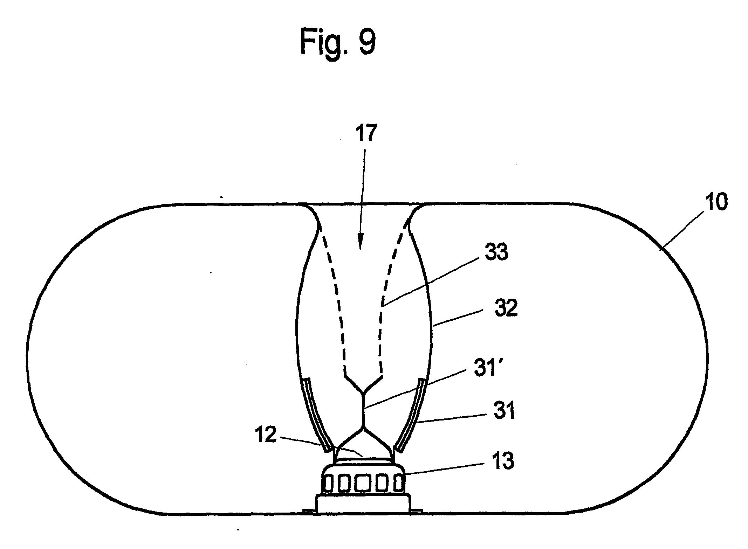

Figur 8 zeigt schematisch ein Gewebeteil 30 zur Herstellung einer Oberplatte eines Airbags nach einem dritten Ausführungsbeispiel der Erfindung. Das Gewebeteil 30 unterschiedet sich von dem des ersten Ausführungsbeispiel darin, dass die Zungen 3 mehrere Falten 31 aufweisen. Durch die Falten wird, ähnlich wie beim zweiten Ausführungsbeispiel, zusätzliches Gewebe bereitgestellt, welches beim Aufblasen des Airbags 10 den schlauchartigen Bereich 17 verschliesst. Dies ist schematisch in Figur 9 gezeigt. Im aufgeblasenen Zustand des Airbags 10 werden aus den Falten 31 mit Luft gefüllte Taschen 31', die bewirken, dass sich die Querschnittsfläche des schlauchartigen Bereiches 17 oberhalb des Emblems 12 verkleinert.

Figur 9 zeigt den Airbag 10 wiederum im entfalteten sowie im aufgeblasenen Zustand (Linien 32 bzw. 33).

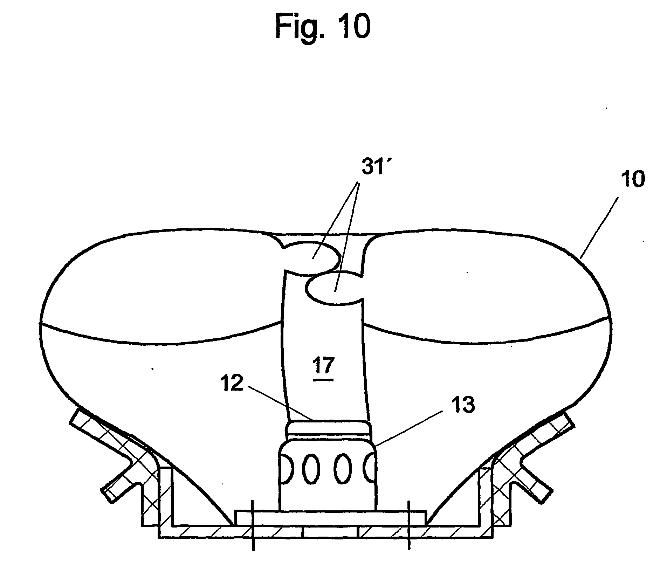

Figur 10 zeigt schematisch den Querschnitt einer Variante des Airbags 10 nach dem dritten Ausführungsbeispiel. In dieser Variante sind die Taschen 31 im oberen Teil des schlauchartigen Bereiches 17 angeordnet.

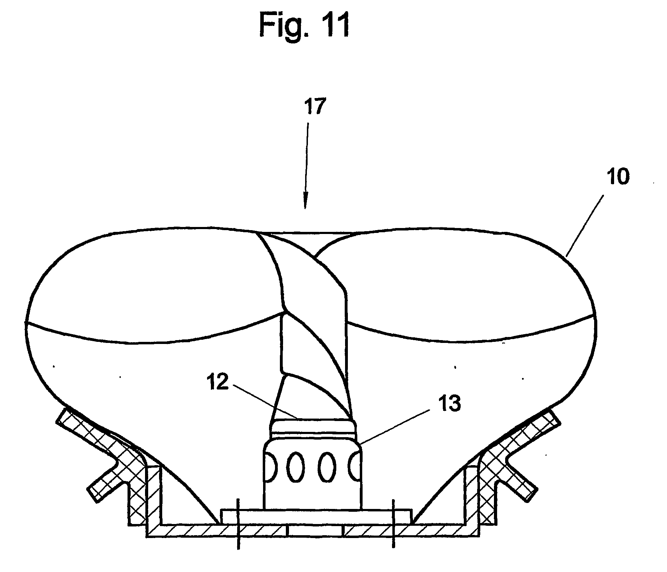

Figur 11 zeigt schematisch den Querschnitt eines Airbags im aufgeblasenen Zustand nach einem vierten Ausführungsbeispiel der Erfindung. In diesem Ausführungsbeispiel ist die Oberplatte relativ zum schlauchartigen Bereich 17 des Airbags 10 verdreht am Airbagmodul angebracht. Dadurch ist der schlauchartige Bereich 17 nach Aufblasen des Airbags wie gezeigt abegschnürt und damit verschlossen.

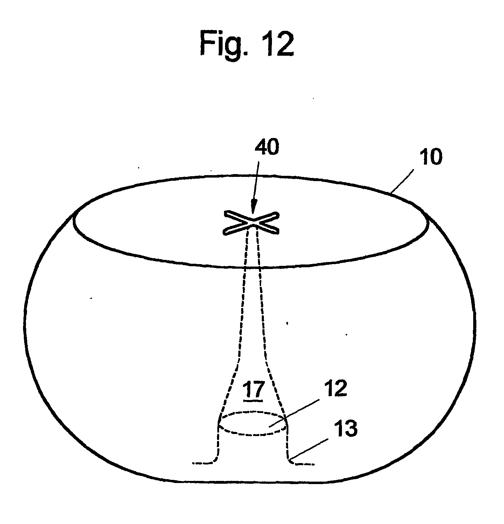

Figur 12 zeigt schematisch eine perspektivische Ansicht eines Airbags 10 nach einem fünften Ausführungsbeispiel der Erfindung, im aufgeblasenen Zustand. In diesem Ausführungsbeispiel weist der schlauchartige Bereich 17 einen sternförmigen Querschnitt 40 auf. Ein solcher Querschnitt ermöglicht einerseits eine Entfaltung des Airbags um das Emblem 12 herum, begrenzt aber gleichzeitig die Querschnittsfläche des schlauchartigen Bereiches 17. Dies wird erreicht dadurch, dass der Umfang der sternförmigen Querschnittsfläche grösser ist, als der des Emblems 12.
Durch diese Formgebung ist die Querschnittsfläche gering im Verhältnis zum Querschnittsumfang.

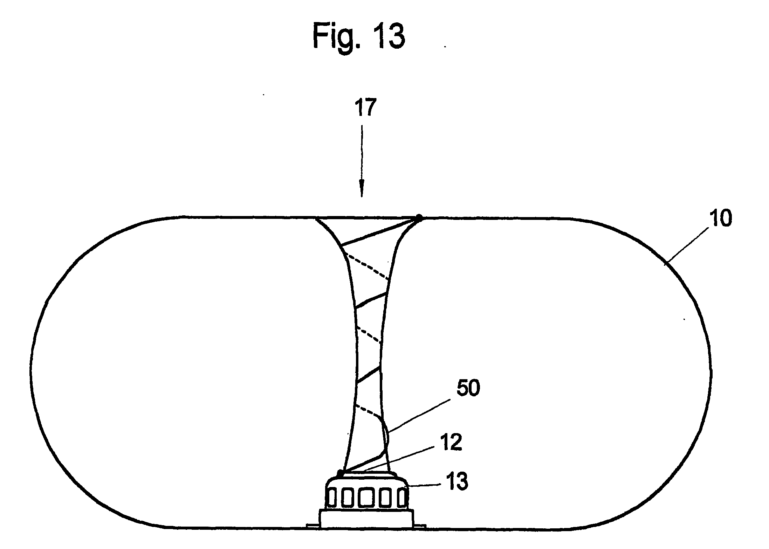

Figur 13 zeigt schematisch den Querschnitts eines Airbags 10 nach einem sechsten Ausführungsbeispiel der Erfindung. In diesem Ausführungsbeispiel ist ein Zugband 50 vorgesehen, das den zylindrischen Bereich 17 im aufgeblasenen Zustand des Airbags 10 abschnürt. Zu diesem Zweck ist das Zugband 50 spiralenartig um den schlauchartigen Bereich herum verlegt, sowie mit einem Ende am Airbagmodul und mit dem anderen Ende an der Oberplatte des Airbags 10 befestigt. Gleichzeitig ist die Länge des Zugbandes derart, dass bei einer vollen Entfaltung des Airbags ein Abschnüren des schlauchartigen Bereiches ausgelöst wird.

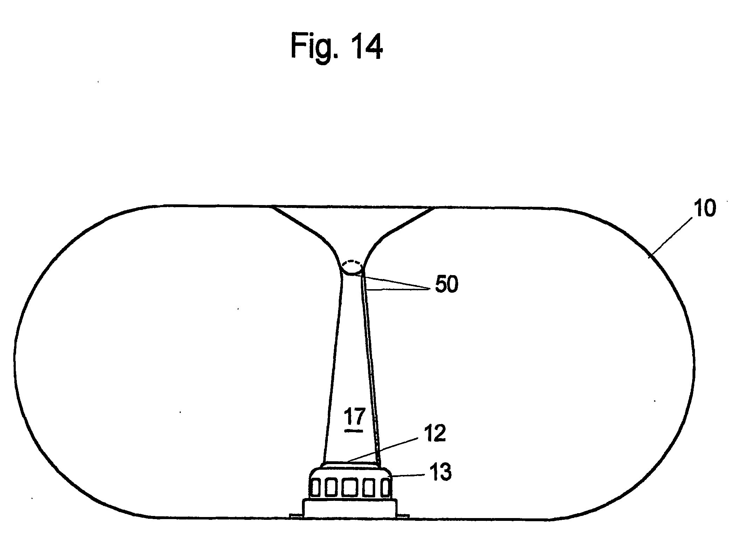

Figur 14 zeigt eine Ausführungsvariante des sechsten Ausführungsbeispieles. In dieser Variante ist das Zugband nicht spiralförmig um den schlauchartigen Bereich 17 herum, sondern lediglich einfach um den obereren Umfang des Bereiches 17 verlegt und befestigt. Wiederum ist die Länge des Zugbandes derart, dass bei einem vollständigen Aufblasen des Airbags 10 der schlauchartige Bereich oben abgeschnürt wird.

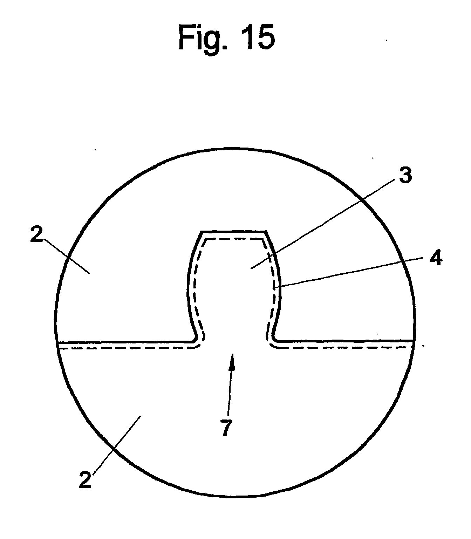

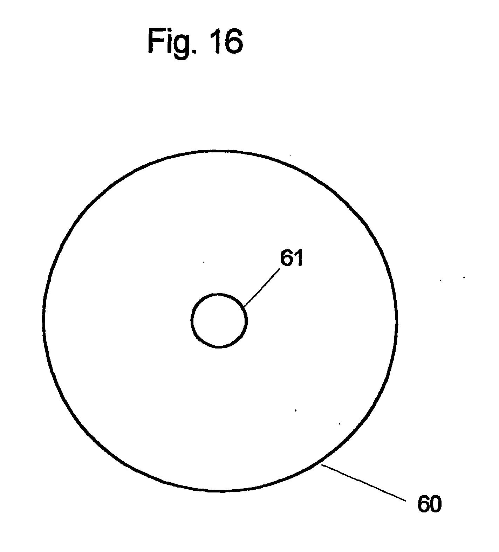

Der Vollständigkeit halber zeigen Figuren 15 und 16 schematisch in Draufsicht die Oberplatte 5 sowie eine Unterplatte 60 des Airbags 10 nach dem ersten Ausführungsbeispiel. Die Oberplatte 10 ist in einem teilgefalteteten Zustand mit den vernähten Zungen 3 gezeigt. Die Bezugszeichen entsprechen dabei denen von Figur 1. Die Unterplatte 60 weist ausserdem ein Loch 61 zur Befestigung am Airbagmodul auf.

Es ist anzumerken, dass die Erfindung nicht auf die beschriebenen Ausführungsbeispiele beschränkt ist, sondern Modifikationen innerhalb des durch die Ansprüche definierten Schutzbereiches umfasst.

## Patentansprüche

1. Airbag für ein Fahrzeug, zur Anordnung in einem Lenkrad des Fahrzeuges unter einer Abdeckung (11) derart, dass ein Zentrumsteil (12) der Abdeckung (11) bei einer Entfaltung des Airbags (10) in Position bleibt, mit einer Oberplatte (5) und einer damit verbundenen Unterplatte (60), und einem oberhalb des Zentrumsbereiches (12) anzuordnenden, schlauchartigen Bereich(17) zur Verbindung der Oberplatte (5) mit einem Airbagmodul (9) im Bereich des Zentrumteils (12) und wobei im aufgeblasenen Zustand des Airbags (10) die Querschnittsfläche des schlauchartigen Bereiches (17) vom Zentrumsteil (12) in Richtung zur Oberplatte (5) abnimmt,
**dadurch gekennzeichnet,**
**dass** die Oberplatte (5) zwei zueinander im wesentlichen symmetrischen Hälften (1) umfasst, die jeweils eine Zunge (3) aufweisen, wobei die Zungen (3) den schlauchartigen Bereich (17) bilden.

2. Airbag nach Anspruch 1, wobei in der Wandung des schlauchartigen Bereiches (17) eine oder mehrere aufblasbare Taschen (21, 31') vorgesehen sind, die im aufgeblasenen Zustand die Querschnittsfläche des schlauchartigen Bereiches (17) vermindern.

3. Airbag nach Anspruch 1 oder 2, wobei in der Wandung des schlauchartigen Bereiches (17) eine oder mehrere Falten (31) vorgesehen sind, welche im aufgeblasenen Zustand des Airbags (10) Taschen (31') bilden, die die Querschnittsfläche des schlauchartigen Bereiches (17) vermindern.

4. Airbag nach einem der vorhergehenden Ansprüche, wobei die Querschnittsfläche des schlauchartigen Bereiches (17) an der Oberplatte (5) sternförmig ist.

5. Airbag nach einem der vorhergehenden Ansprüche, wobei der schlauchartige Bereich (17) gegenüber der Oberplatte (5) verdreht am Airbagmodul (9) angebracht ist.

6. Airbag nach einem der vorhergehenden Ansprüche, wobei der schlauchartige Bereich (17) aus einem Gewebe besteht, das sich bei Aufblasen des Airbags (10) derart in eine Richtung zusammenzieht, dass die Querschnittsfläche des schlauchartigen Bereiches (17) vermindert ist.

7. Airbag nach einem der vorhergehenden Ansprüche, mit einem Zugband (50), das mit einem Ende an dem Airbagmodul (9), und mit dem anderen Ende an der Oberplatte (5) befestigt ist, und das um den schlauchartigen Bereich (17) herum verläuft, zum Abschnüren des schlauchartigen Bereiches (17) bei einem Aufblasen des Airbags (10).

8. Airbag nach einem der vorhergehenden Ansprüche, **dadurch gekennzeichnet,dass** die zueinander im wesentlichen symmetrischen Hälften (1) der Oberplatte (5) jeweils einen im wesentlichen die Form eines Kreisausschnittes aufweisenden Teil (2) aufweisen, wobei jeweils die Zunge (3) in Richtung der Höhe des Kreisausschnittes (2) verläuft,und wobei die beiden Hälften (1) entlang der Sehnen der Kreisausschnitte (2)ausser im Bereich der Ansätze (7) der Zungen (3) sowie entlang der Seiten der Zungen (3) miteinander verbunden sind, und wobei die Oberplatte (5) im Bereich der von den Kreisausschnitten (2) wegweisenden Enden der Zungen (3) unterhalb des Zentrumteiles (12) an einem Airbagmodul (9) befestigbar ist.

9. Airbag nach Anspruch 8, wobei die Hälften (1) zumindest teilweise durch Vernähung miteinander verbunden sind.

10. Airbag nach Anspruch 8 oder 9, wobei die Zungen (3) jeweils eine tonnenförmige Fläche aufweisen.

11. Airbag nach einem der Ansprüche 8 bis 10, wobei die Zungen (3) jeweils mindestens eine Falte (31) aufweisen.

12. Airbag nach einem der Ansprüche 8 bis 11, wobei die Zungen (3) jeweils mindestens eine Tasche (21, 31') aufweisen.

13. Airbag nach einem der Ansprüche 8 bis 12, wobei die Zungen (3) relativ zu den die Form eines Kreisausschnittes aufweisenden Teilen (2) verdreht am Airbagmodul (9) angebracht sind.

14. Airbag nach einem der Ansprüche 8 bis 13, wobei die Zungen (3) aus einem Gewebe bestehen, dass sich bei einer Ausdehnung entlang der Längsachse der Zungen (3) quer dazu zusammenzieht.

## Claims

1. Airbag for a vehicle, to be arranged in a steering wheel of the vehicle under a cover (11), in such a way that, during a deployment of the airbag (10), a centre part (12) of the cover (11) remains in position, with an upper plate (5) and a lower plate (60) connected to the latter, and with a tubular region (17), to be arranged above the centre region (12), for connecting the upper plate (5) to an airbag module (9) in the region of the centre part (12), and in the inflated state of the airbag (10) the cross-sectional area of the tubular region (17) decreasing from the centre part (12) in the direction of the upper plate (5),
**characterized in that**
the upper plate (5) comprises two halves (1) which are essentially symmetrical to one another and each have a tongue (3), the tongues (3) forming the tubular region (17).

2. Airbag according to Claim 1, in the wall of the tubular region (17) one or more inflatable pockets (21, 31') being provided, which, in the inflated state, reduce the cross-sectional area of the tubular region (17).

3. Airbag according to Claim 1 or 2, in the wall of the tubular region (17) one or more folds (31) being provided, which, in the inflated state of the airbag (10), form pockets (31') which reduce the cross-sectional area of the tubular region (17).

4. Airbag according to one of the preceding claims, the cross-sectional area of the tubular region (17) on the upper plate (5) being star-shaped.

5. Airbag according to one of the preceding claims, the tubular region (17) being mounted on the airbag module (9) so as to be rotated with respect to the upper plate (5).

6. Airbag according to one of the preceding claims, the tubular region (17) consisting of a fabric which, during the inflation of the airbag (10), contracts in one direction in such a way that the cross-sectional area of the tubular region (17) is reduced.

7. Airbag according to one of the preceding claims, with a tension band (50) which is fastened at one end to the airbag module (9) and at the other end to the upper plate (5) and which runs around the tubular region (17), for tying off the tubular region (17) during the inflation of the airbag (10).

8. Airbag according to one of the preceding claims, **characterized in that** the halves (1), which are essentially symmetrical to one another, of the upper plate (5) each have a part (2) essentially in the form of a circular cutout, the tongue (3) in each case running in the direction of the height of the circular cutout (2), and the two halves (1) being connected to one another along the chords of the circular cutouts (2), as well as in the region of the starts (7) of the tongues (3), and also along the sides of the tongues (3), and the upper plate (5) being capable of being fastened to an airbag module (9), below the centre part (12), in the region of those ends of the tongues (3) which point away from the circular cutouts (2).

9. Airbag according to Claim 8, the halves (1) being connected to one another at least partially by stitching.

10. Airbag according to Claim 8 or 9, the tongues (3) each having a barrel-shaped surface.

11. Airbag according to one of Claims 8 to 10, the tongues (3) each having at least one fold (31).

12. Airbag according to one of Claims 8 to 11, the tongues (3) each having at least one pocket (21, 31').

13. Airbag according to one of Claims 8 to 12, the tongues (3) being attached to the airbag module (9) so as to be rotated in relation to the parts (2) having the form of a circular cutout.

14. Airbag according to one of Claims 8 to 13, the tongues (3) consisting of a fabric which, in the event of expansion along the longitudinal axis of the tongues (3), contracts transversely thereto.

## Revendications

1. Coussin gonflable pour un véhicule, à implanter dans un volant du véhicule, sous un cache (11), de sorte qu'une pièce centrale (12) du cache (11) reste en position lors du déploiement du coussin gonflable (10), avec un disque supérieur (5) et un disque inférieur (60) qui lui est relié, et avec une zone tubulaire (17), à disposer au dessus de la partie centrale (12), pour la liaison du disque supérieur (5) à un module de coussin gonflable (9) dans la zone de la pièce centrale (12), et, à l'état gonflé du coussin gonflable, la section de la zone tubulaire (17) diminuant de la pièce centrale (12) vers le disque supérieur (5),
**caractérisé en ce que**
le disque supérieur (5) comprend deux moitiés (1), sensiblement symétriques l'un par rapport à l'autre, qui présentent chacune une langue (3), les langues (3) constituant la zone tubulaire (17).

2. Coussin gonflable selon la revendication 1, une ou plusieurs poches gonflables (21, 31'), qui à l'état gonflé réduisent la section de la zone tubulaire (17), étant prévues dans la paroi de la zone tubulaire (17).

3. Coussin gonflable selon la revendication 1 ou 2, un ou plusieurs plis (31), qui forment, à l'état gonflé du coussin gonflable (10), des poches (31') qui réduisent la section de la zone tubulaire (17), étant prévus dans la paroi de la zone tubulaire (17).

4. Coussin gonflable selon l'une des revendications précédentes, la section de la zone tubulaire (17) ayant une forme d'étoile au niveau du disque supérieur (5).

5. Coussin gonflable selon l'une des revendications précédentes, la zone tubulaire (17) étant montée torsadée, face au disque supérieur (5), sur le module de coussin gonflable (9).

6. Coussin gonflable selon l'une des revendications précédentes, la zone tubulaire (17) étant constituée d'un tissu qui, lors du gonflage du coussin gonflable (10), se resserre dans une direction telle que la section de la zone tubulaire (17) est réduite.

7. Coussin gonflable selon l'une des revendications précédentes, doté d'une bande de traction (50) qui est fixée par une extrémité au module de coussin gonflable (9), et par l'autre extrémité au disque supérieur (5), et qui passe autour de la zone tubulaire (17), pour l'étranglement de la zone tubulaire (17) lors du gonflage du coussin gonflable (10).

8. Coussin gonflable selon l'une des revendications précédentes **caractérisé en ce que** les moitiés (1), sensiblement symétriques l'une par rapport à l'autre, du disque supérieur (5) comportent chacune une partie (2) présentant sensiblement la forme d'une portion de cercle, chacune des langues (3) évoluant vers la hauteur de la portion de cercle (2), et les deux moitiés (1) étant reliées entre elles le long des cordes des portions de cercle (2), sauf dans la zone des embases (7) de langues (3), de même que le long des cotés des langues (3), et le disque supérieur (5) étant fixable par la zone des extrémités des langues (3), s'éloignant des portions de cercle (2), à un module de coussin gonflable (9) sous la partie centrale (12).

9. Coussin gonflable selon la revendication 8, les moitiés (1) étant, au moins partiellement, reliées entre elles par couture.

10. Coussin gonflable selon la revendication 8 ou la 9, les langues présentant chacune une surface en forme de tonneau.

11. Coussin gonflable selon l'une des revendications 8 à 10, les langues (3) présentant chacune au moins un pli (31).

12. Coussin gonflable selon l'une des revendications 8 à 11, les langues (3) présentant chacune au moins une poche (21, 31').

13. Coussin gonflable selon l'une des revendications 8 à 12, les langues (3) étant montées sur le module de coussin gonflable (9), torsadées par rapport aux pièces (2) qui présentent la forme d'une portion de cercle.

14. Coussin gonflable selon l'une des revendications 8 à 13, les langues (3) étant constituées d'un tissu, qui se resserre, lors d'une extension selon l'axe longitudinal des langues (3), transversalement audit axe.
